# EUROPEAN PATENT APPLICATION

(11) **EP 2 846 338 A1**
(43) Date of publication of application: **11.03.2015**
(21) Application number: 14181285.9
(22) Date of filing: 18.08.2014
(51) Int. Cl.: H01G 4/30, H01G 4/232

(54) **Capacitor fabrication using nano materials**

(30) Priority: 06.09.2013 US 201361874409 P; 01.07.2014 US 201414320979
(71) Applicant: Delphi Technologies, Inc., Troy MI 48007 (US)
(72) Inventor: Taylor, Ralph S., Noblesville, IN Indiana 46062 (US)
(74) Representative: Robert, Vincent

(57) **Abstract**

A multi-layer capacitor (10) includes an anode (12), a cathode (16), a dielectric material (20), a first endcap (22A), and a second endcap (22B). The anode (12) and cathode (16) are formed of one or more layers (14A, 14B) of interlaced conductive material. The dielectric material (20) is interposed between each of the layers (14A, 14B) of the anode (12) and the cathode (16). The first and second endcaps configured to interconnect each of the layers (14A, 14B) of the anode (12) and cathode (16), respectively. The endcaps are formed of conductive nano material. A method of forming an endcap of a capacitor (10) configured to interconnect one or more layers (14A, 14B) of conductive material includes the step of applying conductive nano material (34) to exposed conductive surfaces of at least one of an anode (12) and a cathode (16) of the one or more layers (14A, 14B) of conductive material. The method also includes the step of exposing the nano material to a source of energy effective to initiate self-sintering of the nano material.

## Description

### TECHNICAL FIELD

This disclosure generally relates to a multi-layer capacitor, and more particularly relates to a capacitor with endcaps formed of conductive nano material.

### BACKGROUND OF INVENTION

Metallized film capacitors typically form electrical and mechanical connections between layers of conductors separated by dielectric films using an arc spray process. Arc spray uses DC power to energize two conductive wires of Babbitt metal by applying a voltage to one wire relative to the other. This energized wire is then fed through a feeder into a gun head. It is at the gun head that the wires meet and arc against each other, thereby creating molten material. Then dry compressed air is introduced to the arc zone, the molten material is atomized into tiny droplets that are propelled toward a prepared part or target. As the droplets hit the target, they flatten out and make molten dots. The molten dots interlock one on top another and form a mechanical and electrical bond.

This arc spray process is generally considered to be a messy, time consuming process, involving preparing the target surface, cleaning, wrapping other surfaces to protect other surfaces from over spray, spraying, removing wrapping, cleaning of the overspray surfaces and inspection depending on the application lead attachment, welding or soldering is then performed. The electrical interconnection formed by the arc spray process is sometimes considered to be a weak link in a capacitor's design. Furthermore, the arc spray process can cause intrusion of the Babbitt material into the inner layers of the capacitor, which can lead to shorts and reduced capacitance.

### SUMMARY OF THE INVENTION

In accordance with one embodiment, a multi-layer capacitor is provided. The capacitor includes an anode, a cathode, a dielectric material, a first endcap, and a second endcap. The anode is formed of one or more layers of conductive material. The cathode is formed of one or more layers of conductive material interlaced with the layers of the anode. The dielectric material is interposed between each of the layers of the anode and the cathode e. The first endcap is configured to interconnect each of the layers of the anode. The second endcap is configured to interconnect each of the layers of the cathode. The first endcap and the second endcap are formed of conductive nano material.

The capacitor may further comprise a first lead electrically attached to the first endcap, wherein conductive nano material is used to electrically attach the first lead to the first end cap. The first lead may be electrically attached to the first endcap when the first end cap is formed. The capacitor may further comprise a second lead electrically attached to the second endcap, wherein conductive nano material is used to electrically attach the second lead to the second end cap. The second lead may be electrically attached to the second endcap when the second end cap is formed.

In another embodiment, a method of forming an endcap of a capacitor configured to interconnect one or more layers of conductive material is provided. The method includes the step of applying conductive nano material to exposed conductive surfaces of at least one of an anode and a cathode of the one or more layers of conductive material. The method also includes the step of exposing the nano material to a source of energy effective to initiate self-sintering of the nano material.

The method may include a step of placing a lead in contact with the conductive nano material.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a sectional side view of a capacitor with endcaps formed of nano material in accordance with one embodiment;
Figs. 2A-2E are a sequence of illustrations showing fabrication steps of the capacitor of Fig. 1 in accordance with one embodiment; and
Fig. 3 is flowchart of a method of forming an endcap of the capacitor of Fig. 1 in accordance with one embodiment.

### DESCRIPTION OF THE PREFERRED EMBODIMENT

Described herein is a means to form electrical connections between conductive layers or plates of a capacitor using nano metal materials or nano materials that are self-sintered after exposure to a source of energy effective to initiate sintering of the nano material. Optionally, nano materials may also be used to attach an electrically conductive lead or wire to the capacitor.

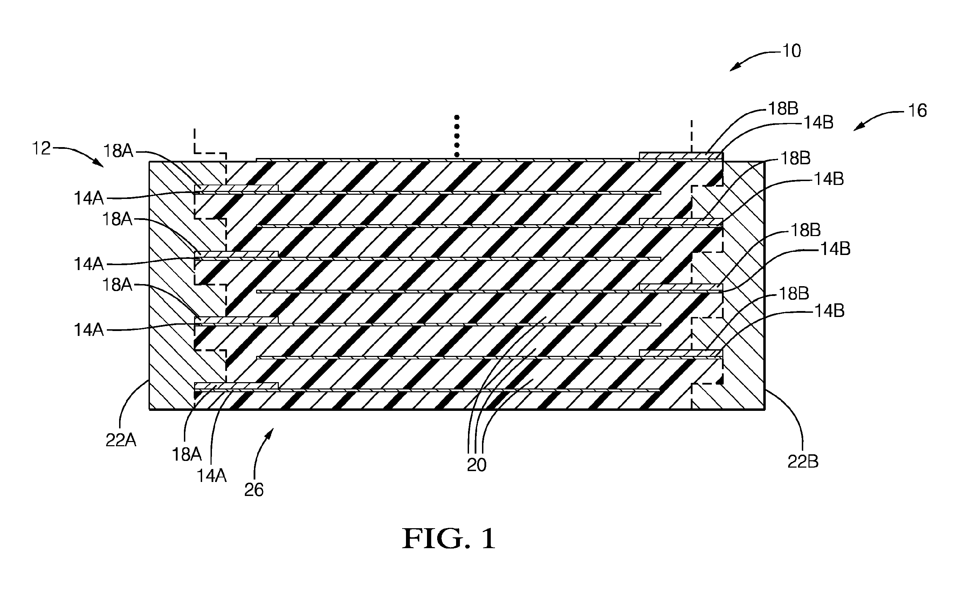

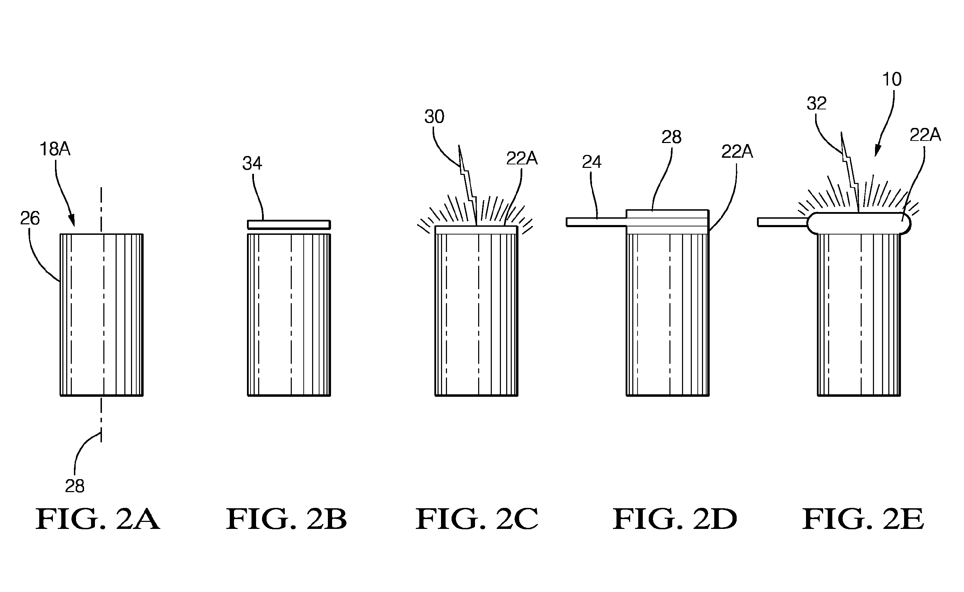

Fig. 1 illustrates a non-limiting example of a multi-layer capacitor, hereafter referred to as the capacitor 10. While the illustration shows a configuration that is sometimes referred to as a stacked capacitor, it is contemplated that the teachings presented herein are also applicable to other capacitor configurations such as wound capacitors, see Fig. 2. In general, the capacitor 10 includes or defines an anode 12 that includes or is formed of one or more layers 14A of conductive material, and a cathode 16 that includes or is formed of one or more layers 14B of conductive material interlaced (i.e. alternating layers) with the layers 14A of the anode 12. Wound capacitors typically have a single conductive layer for the anode, and a single conductive layer for the cathode. The layers 14A and 14B may be formed of aluminum or other conductive metals as will be recognized by those in the capacitor arts. The layers 14A and 14B may include edge metallization 18A and 18B formed of, for example, a 400Å thick layer of zinc. It is contemplated that the capacitor 10 can be either polarized or non-polarized. That is, the use of the modifiers 'anode' and 'cathode' are only for the purpose of distinguishing the two electrical connections, and not meant to suggest in any way that the capacitor described herein is necessarily a polarized capacitor.

The capacitor 10 also includes an arrangement of a dielectric material 20 interposed between each of the layers 14A and 14B of the anode 12 and the cathode 16, respectively. The dielectric material 20 may be, for example, a 2.5um thick layer of polypropylene (PP) film. The width, length, thickness of dielectric, and number of layers used to form the capacitor 10 may be varied to achieve a desired capacitance value of the capacitor 10, as will be recognized by those in the capacitor arts.

The capacitor 10 may also include a first endcap 22A configured to electrically and mechanically interconnect each of the layers 14A of the anode 12, and a second endcap 22B configured to mechanically and electrically interconnect each of the layers 14B of the cathode 16. Preferably, the first endcap 22A and the second endcap 22B are formed of conductive nano material. Nano material may include various mixtures of Al, Ag, Cu, Zn, or other suitable conductive metals and is available from nanoComposix of San Diego, CA or NovaCentrix of Austin, TX. The nano material can be dispersed in a binder material to provide a thick-film ink type material, or in the form of a tape, tube or other disposable material to hold the nano material in place. Once dispersed, the nano material is briefly exposed to an energy source to cause the nano materials to self-sinter. Some non-limiting examples of energy sources include a spark, matches (fire), a camera flash, and a beam from a laser. The amount of nano material needed is preferably enough (and may require multiple passes of apply nano-material and sintering) to form a low-resistance electrical connection to the edge metallization 18A and 18B, for example a resistance less than 2 Ω/□.

Figs. 2A-2E illustrates a non-limiting example of a sequence of steps that can be used to electrically attach a first lead 24 to a body portion 26 the capacitor 10. Fig. 2A in this example illustrates the capacitor 10 as a wound type capacitor where the body portion 26 includes the layers 14A and 14B, and the dielectric material 20 wound around an axis 28. Accordingly, the edge metallization 18A may be exposed on the end of the body portion 26. It should be recognized that the orientation of the layers 14A and 14B for Figs 2A-2E are oriented perpendicular to that shown in Fig. 1.

Fig. 2B illustrates the body portion 26 with nano material 34 applied to the end of the body portion 26. As suggested above, the nano material 34 may be a preformed part, or may be in the form of a paste or powder that is applied to the body portion 26 using any of a variety of known techniques.

Fig. 2C illustrates the first endcap 22A attached to the body portion 26 after energy 30 is applied to the un-sintered nano material 34 to form the first endcap 22A by self-sintering of the nano material 34.

Fig. 2D illustrates the first lead 24 placed onto the first endcap 22A with an additional layer of un-sintered nano material 34 applied over and/or around the first lead 24. The first lead 24 may be a wire or ribbon of electrically conductive material such as zinc coated copper.

Fig. 2E illustrates how the first lead 24 is electrically attached to the first endcap 22A when the additional un-sintered nano material 34 is sintered following an exposure to energy 32 whereby nano material is used to electrically attach the first lead 24 to the first endcap 22A.

Alternatively, the steps of forming the first endcap 22A and electrically attaching the first lead 24 may be combined. For example, the nano material could be dispersed in a in a manner similar to that described above after placing a wire or other electrical interconnect in contact with the previously applied but un-sintered nano material, and then all of the un-sintered nano material self-sintered at one time as describe above. Or as previously described, the combined lead attach process mentioned above can be a two-step process where electrical interconnection of the edge metallization nano material is done first, the first lead 24 is electrically attached by a second application of nano materials. A capacitor to capacitor interconnect can be formed in a similar way where the electrical interconnect is replaced with another capacitor. This creates either a series or parallel connection of multiple capacitors.

Similarly, the capacitor 10 may include a second lead (not shown) electrically attached to the second endcap 22B. The second lead may be attached using any of the techniques described above, and may be attached at the same time as the first lead 24 is attached, or as part of a separate process.

As described above, a wire or bus bar (e.g. the first lead 24) may be electrically and mechanically attached to an endcap (e.g. the first endcap 22A or the second endcap 22B) in the same way the endcap was formed. Alternatively, the first lead 24 maybe soldered to the first endcap 22A.

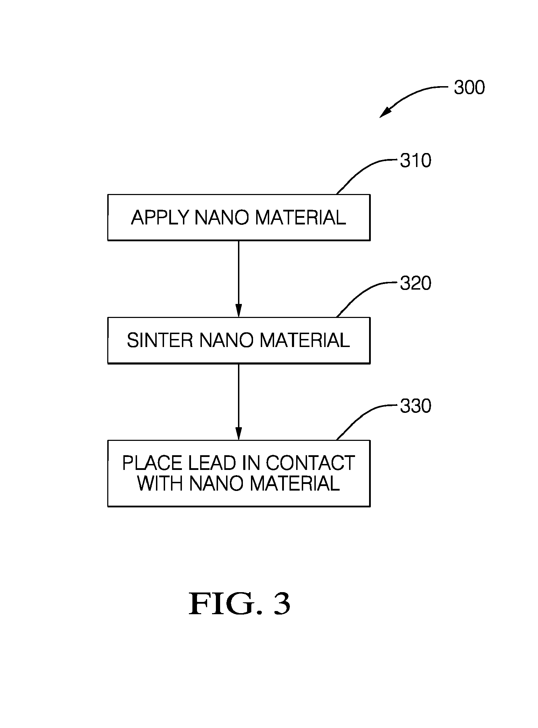

Fig. 3 illustrates a non-limiting example of a method 300 of forming an endcap (e.g. the first endcap 22A or the second endcap 22B) of the capacitor 10 configured to interconnect one or more layers (e.g. the layers 14A and 14B) of conductive material.

Step 310, APPLY NANO MATERIAL, may include applying conductive nano material (e.g. the nano material 34) to exposed conductive surfaces (e.g. - the edge metallization 18A and 18B) either or both the anode 12 and the cathode 16.

Step 320, SINTER NANO MATERIAL, may include exposing the nano material 34 to a source of energy effective to initiate self-sintering of the nano material 34 such as a spark, matches (fire), a camera flash, or a beam from a laser.

Step 330, PLACE LEAD IN CONTACT NANO MATERIAL, may include placing a lead (e.g. the first lead 24) in contact with the nano material 34. Step 330 may be followed by the application of additional nano material and another self-sintering process to electrically attach the lead to the previously formed endcap. It is contemplated that steps 320 and 330 could be reversed relative to the order shown in Fig. 3 so the lead could be attached by one or more applications of un-sintered nano material followed by a single sintering step. Alternatively, the lead could be attached to a sintered endcap by other methods such as soldering.

Accordingly, a way to form electrical connections between conductor layers of a capacitor is provided. This process could also be used to interconnect capacitor to capacitor in either a series or parallel connection. This process is generally faster and yields a higher quality electrical connection as the connection is a solid layer of dense metal as opposed to an interconnection of molten metal dots provided by Babbitt metal. Unlike the known arc spray process, the process described herein has no overspray which eliminates the masking, unmasking and cleaning steps found in the arc spray process. The process can readily form electrical connections with different thickness layers without intrusion of metals to the inner layers of the capacitor, and lowers the overall temperatures necessary to form electrical connections when compared to the arc spray process. It is recognized that an end cap may require one or more layers of nano metals where each one sintered by an energy source to achieve the desired electrical resistance. Multiple layers may be advantageous as self-sintering one thick layer of nano metal may generate enough heat to melt materials underlying the nano metal. As such, it may be advantageous to build up a thick layer by a progression of lower energy sintering steps.

While this invention has been described in terms of the preferred embodiments thereof, it is not intended to be so limited, but rather only to the extent set forth in the claims that follow.

## Claims

1. A multi-layer capacitor (10) comprising:
an anode (12) formed of one or more layers (14A) of conductive material;
a cathode (16) formed of one or more layers (14B) of conductive material interlaced with the layers (14A) of the anode (12);
a dielectric material (20) interposed between each of the layers (14A, 14B) of the anode (12) and the cathode (16);
a first endcap (22A) configured to interconnect each of the layers (14A) of the anode (12); and
a second endcap (22B) configured to interconnect each of the layers (14B) of the cathode (16), wherein
the first endcap (22A) and the second endcap (22B) are formed of conductive nano material (34).

2. Capacitor (10) in accordance with claim 1, wherein capacitor (10) further comprises
a first lead (24) electrically attached to the first endcap (22A), wherein conductive nano material (34) is used to electrically attach the first lead (24) to the first end cap.

3. The capacitor (10) in accordance with claim 2, wherein the first lead (24) is electrically attached to the first endcap (22A) when the first end cap is formed.

4. Capacitor (10) according to any one of the preceding claims, wherein capacitor (10) further comprises
a second lead electrically attached to the second endcap (22B), wherein conductive nano material (34) is used to electrically attach the second lead to the second end cap.

5. Capacitor (10) in accordance with claim 4, wherein the second lead is electrically attached to the second endcap (22B) when the second end cap is formed.

6. A method (300) of forming an endcap of a capacitor (10) configured to interconnect one or more layers (14A, 14B) of conductive material, said method (300) comprising:
applying conductive nano material (34) to exposed conductive surfaces of at least one of an anode (12) and a cathode (16) of the one or more layers (14A, 14B) of conductive material; and
exposing the nano material (34) to a source of energy (30) effective to initiate self-sintering of the nano material (34).

7. Method (300) in accordance with claim 6, wherein the method (300) includes
placing a lead in contact with the conductive nano material (34).
